# EUROPEAN PATENT APPLICATION

(11) **EP 4 722 107 A1**
(43) Date of publication of application: **08.04.2026**
(21) Application number: 24815099.7
(22) Date of filing: 02.05.2024
(51) Int. Cl.: B64U 20/65, B64U 20/70, B64U 101/26

(54) **HOUSING FOR DRONE, METHOD FOR MANUFACTURING SAME, AND DRONE**

(30) Priority: 02.06.2023 JP 2023091302
(71) Applicant: Mitsui Chemicals, Inc., Tokyo 104-0028 (JP)
(72) Inventor: MIZUMOTO, Kazuya, Sodegaura-shi, Chiba 299-0265 (JP); SAKAI, Atsushi, Sodegaura-shi, Chiba 299-0265 (JP)
(74) Representative: Hoffmann Eitle
(86) International application number: PCT/JP2024/016902
(87) International publication number: WO 2024/247615

(57) **Abstract**

Provided is a housing for a drone having a monocoque structure which can be manufactured even by using a thermoplastic resin. This housing for a drone includes: a lower body having a bottom surface part and a wall part formed at a peripheral edge part of the bottom surface part; and an upper body having an upper surface part and a wall part formed on a peripheral edge part of the upper surface part. The lower body has an outer shell made of a fiber-reinforced resin in which a thermoplastic resin is impregnated into reinforcing fibers, and a reinforcing material made of a thermoplastic resin and partially disposed inside the outer shell.

## Description

### Technical Field

The present invention relates to a housing for a drone, a method for manufacturing the housing, and a drone.

### Background Art

A method for reducing the weight of the housing by forming a housing that constitutes the main body portion of a drone from a resin is under consideration.

PTL 1 discloses that in order to achieve both weight reduction of the housing for a drone by virtue of resin and obtainment of satisfactory rigidity of the housing, the frame body of the housing has a monocoque structure made of a single member including a flange portion that surrounds the inside of the housing. According to PTL 1, by increasing rigidity of the frame body by forming the frame body as a monocoque structure, damage to the frame body or adverse effects on other components due to stress or load can be suppressed.

### Citation List

### Patent Literature

PTL 1
Japanese Patent Application Laid-Open No. 2019-069658

### Summary of Invention

### Technical Problem

The monocoque structure as disclosed in PTL 1 is a structure that increases rigidity of the structure with a wall surface. The monocoque structure can reduce the number of components for obtaining satisfactory rigidity as compared with a frame structure, which uses frame members placed inside to increase the rigidity of the structure, thereby enabling the reduction of the weight of a drone.

On the other hand, the monocoque structure made of a single member as disclosed in PTL 1 requires an undercut portion in which the wall surface protrudes inward, and therefore, when the structure is molded by injection molding, the structure cannot be taken out from the mold. Therefore, the structure is manufactured by a method of molding the structure by vacuum molding or the like using a dividable mold and then dividing the mold to take out the molded structure. Such a manufacturing method is commonly performed for thermosetting resins. On the other hand, when an attempt is made to produce a structure having a similar shape using thermoplastic resins, which are usually injection molded, a different mold from the usually used mold must be prepared, which is economically inconvenient.

The present invention has been made in view of the above problems, and an object of the present invention is to provide a housing (for a drone) that is a monocoque structure and can be manufactured even when a thermoplastic resin is used, a method for manufacturing the housing, and a drone including the housing.

### Solution to Problem

An embodiment of the present invention for achieving the above object relates to housings for a drone as described in the following [1] to [9].
[1] A housing for a drone, the housing including:
   a lower body including a bottom surface portion and a wall portion formed on a peripheral edge portion of the bottom surface portion; and
   an upper body including a top surface portion and a wall portion formed on a peripheral edge portion of the top surface portion, in which
   the lower body includes an outer shell and a reinforcing material, the outer shell being made of a fiber-reinforced resin that includes reinforcing fibers and a thermoplastic resin spreading through the reinforcing fibers, the reinforcing material being made of a thermoplastic resin and disposed on a part of an inner surface of the outer shell.
[2] The housing according to [1], in which
   the outer shell includes a unidirectional fiber layer composed of the fiber-reinforced resin in which the reinforcing fibers are arranged to be oriented in one direction.
[3] The housing according to [1] or [2], in which
   the reinforcing material made of the thermoplastic resin has a lattice shape formed of a plurality of bottom surface ribs.
[4] The housing according to [3], in which:
   the reinforcing material made of the thermoplastic resin includes a boss portion formed at an intersection of the plurality of bottom surface ribs; and
   the lower body is joined to the upper body by a bolt inserted into the boss portion.
[5] The housing according to [3] or [4], in which:
   the reinforcing material made of the thermoplastic resin includes a wall surface reinforcing portion disposed on an inner surface of the wall portion of the lower body; and
   the wall surface reinforcing portion is connected to the plurality of bottom surface ribs.
[6] The housing according to any one of [3] to [5], in which:
   the plurality of bottom surface ribs are disposed in the lattice shape defining a section of a quadrangle;
   the outer shell includes a unidirectional fiber layer composed of the fiber-reinforced resin in which the reinforcing fibers are arranged to be oriented in one direction; and
   the unidirectional fiber layer includes a layer in which the reinforcing fibers are arranged to be oriented in a diagonal direction of the quadrangle.
[7] The housing according to any one of [1] to [6], in which:
   the reinforcing material made of the thermoplastic resin includes a wall surface reinforcing portion disposed on an inner surface of the wall portion of the lower body;
   the wall surface reinforcing portion covers an upper end of the wall portion of the lower body; and
   the wall surface reinforcing portion covering the upper end of the wall portion of the lower body is in contact with the wall portion of the upper body.
[8] The housing according to any one of [1] to [7], in which
   the reinforcing material is formed by injection of the thermoplastic resin.
[9] The housing according to any one of [1] to [8], in which
   the upper body includes an outer shell and a reinforcing material, the outer shell being made of a fiber-reinforced resin, the reinforcing material being made of a thermoplastic resin and disposed on an inner surface of the outer shell.

Another embodiment of the present invention for achieving the above object relates to a drone as described in the following [10].
A drone including:
the housing according to any one of [1] to [9].

Another embodiment of the present invention for achieving the above object relates to a method for manufacturing the housing for a drone as described in the following [11].
A method for manufacturing a housing for a drone, the method including:
preparing a lower body including a bottom surface portion and a wall portion formed on a peripheral edge portion of the bottom surface portion;
preparing an upper body including a top surface portion and a wall portion formed on a peripheral edge portion of the top surface portion; and
joining the lower body and the upper body to each other, in which
the lower body includes an outer shell and a reinforcing material, the outer shell being made of a fiber-reinforced resin that includes reinforcing fibers and a thermoplastic resin spreading through the reinforcing fibers, the reinforcing material being made of a thermoplastic resin and disposed on a part of an inner surface of the outer shell, and
in the joining, the lower body and the upper body are joined to each other via the outer shell made of the thermoplastic resin.

### Advantageous Effects of Invention

The present invention can provide a housing (for a drone) that has a monocoque structure and can be manufactured even when a thermoplastic resin is used, a method for manufacturing the housing, and a drone including the housing.

### Brief Description of Drawings

FIG. 1 is a schematic perspective view of a drone according to an embodiment of the present invention;
FIG. 2 is an exploded view of a body portion (housing) of the drone illustrated in FIG. 1;
FIGS. 3A and 3B are schematic plan views indicating the relationship between the lattice shape of bottom surface ribs and the orientation direction of fibers in a unidirectional fiber layer included in a lower outer shell;
FIG. 4 is a schematic cross-sectional view of the end part of the body portion (housing) illustrating a state in which a lower body and an upper body are joined to each other; and
FIG. 5 is a flowchart of a method for manufacturing the body portion (housing).

### Description of Embodiments

### 1. Drone and housing

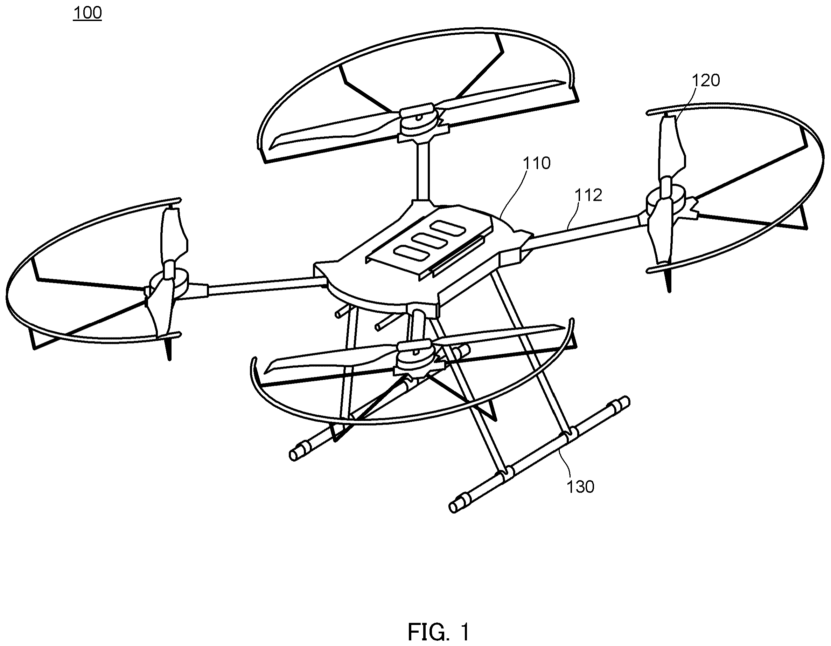

FIG. 1 is a schematic perspective view of drone 100 according to the embodiment of the present invention. As illustrated in FIG. 1, drone 100 includes body portion 110, a plurality of blades 120, a plurality of arm portions 122 that connect blades 120 to body portion 110, and leg portion 130. Drone 100 is capable of flying by rotating each blade 120 and also capable of moving while flying. In the present embodiment, body portion 110 of drone 100 is formed of a housing having a monocoque structure.

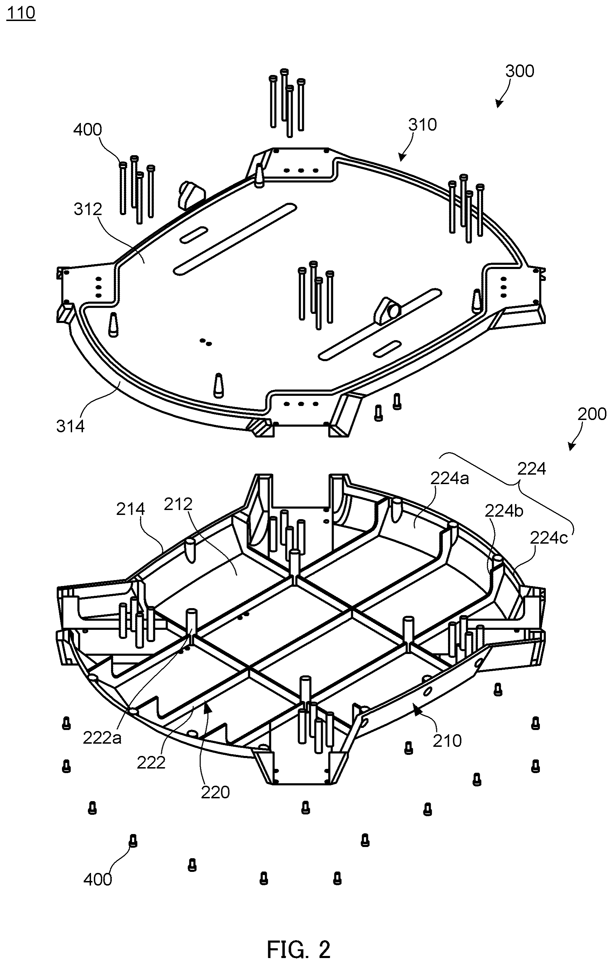

FIG. 2 is an exploded view of body portion 110 (housing) of the drone illustrated in FIG. 1. Body portion 110 includes lower body 200 and upper body 300. Lower body 200 and upper body 300 are joined to each other by a plurality of bolts 400.

The shape of lower body 200 is maintained by lower outer shell 210 made of fiber-reinforced resin. On the inner surface of the housing of lower outer shell 210, lower reinforcing material 220 made of a thermoplastic resin for increasing rigidity of lower body 200 is fused to be disposed on lower outer shell 210. The shape of upper body 300 is maintained by upper outer shell 310 made of a fiber-reinforced resin. On the inner surface of the housing of upper outer shell 310, upper reinforcing material 320 (not illustrated in FIG. 2) made of a thermoplastic resin for increasing rigidity of upper body 300 is fused to be disposed on upper outer shell 310. Lower body 200 and upper body 300 are joined to each other via lower reinforcing material 220 and upper reinforcing material 320.

### 1-1. Lower outer shell and upper outer shell

Lower outer shell 210 and upper outer shell 310 can be formed of a fiber-reinforced resin including, for example, reinforcing fibers arranged to be oriented in one direction and a thermoplastic resin spreading through the reinforcing fibers. The fiber-reinforced resin may be a single layer composed of one unidirectional fiber layer or a multi-layer including a plurality of unidirectional fiber layers.

The type of the reinforcing fiber is not particularly limited, and carbon fibers, glass fibers, aramid fibers, alumina fibers, silicon carbide fibers, boron fibers, metal fibers, or the like can be used. Among these, carbon fibers and aramid fibers are preferable, and carbon fibers are more preferable from the viewpoint of low density and reducing the weight of lower body 200 and upper body 300 to further increase the specific rigidity of the bodies.

The reinforcing fibers may be long fibers oriented in one direction and having a length of 15 mm or more. In addition, the long fibers may be oriented in only one direction, a plurality of layers with different orientation directions of the long fibers may be formed in lower outer shell 210 and upper outer shell 310, or the long fiber may be woven. Alternatively, blocks each including long fibers oriented in one direction may be disposed in lower outer shell 210 and upper outer shell 310 in such a way that the orientation direction of the long fibers in each block is random. Among these, from the viewpoint of improving shaping property during manufacturing, it is preferable that a plurality of layers whose orientation directions of the long fibers are in the same direction or different directions are formed in lower outer shell 210 and upper outer shell 310 or the long fibers are woven. By forming each outermost layer of lower outer shell 210 and upper outer shell 310 as a layer with long fibers woven in or a layer with randomly disposed blocks, the appearance of lower body 200 and upper body 300 can also be improved.

In addition, from the viewpoint of sufficiently improving the effect of improving the rigidity, the average diameter of the reinforcing fibers is preferably 1 µm or more and 20 µm or less and more preferably 4 µm or more and 10 µm or less.

The reinforcing fibers may be subjected to a sizing treatment with a sizing agent. The sizing agent is not particularly limited, but preferably includes an unmodified polyolefin and a modified polyolefin, and more preferably includes a modified polyolefin including a metal carboxylate. The modified polyolefin is, for example, obtained by grafting a carboxylic acid group, a carboxylic acid anhydride group, or a carboxylic acid ester group onto a polymer chain of an unmodified polyolefin, and forming a salt between the functional group and a metal cation.

The unmodified polyolefin is preferably an ethylene-based polymer having a constitutional unit derived from ethylene at a content of 50 mol% or more or a propylene-based polymer having a constitutional unit derived from propylene at a content of 50 mol% or more. Examples of the ethylene-based polymer include ethylene homopolymers and copolymers of ethylene and an α-olefin having 3 or more and 10 or less carbon atoms. Examples of the propylene-based polymer include propylene homopolymers and copolymers of propylene and ethylene or an α-olefin having 4 or more and 10 or less carbon atoms. The unmodified polyolefin is preferably homopolypropylene, homopolyethylene, an ethylenepropylene copolymer, a propylene-1-butene copolymer, or an ethylene-propylene-1-butene copolymer. The α-olefin serving as a raw material of the unmodified polyolefin may be derived from a fossil fuel, may be derived from a biomass raw material, or may be a mixture thereof.

The content of the reinforcing fiber based on the total mass of lower outer shell 210 and upper outer shell 310 is preferably 20% by mass or more and 80% by mass or less, more preferably 30% by mass or more and 75% by mass or less, still more preferably 30% by mass or more and 65% by mass or less, and particularly preferably 35% by mass or more and 60% by mass or less.

The content of the reinforcing fiber (fiber volume fraction (Vf)) based on the total volume of lower outer shell 210 and upper outer shell 310 is preferably 10% by volume or more and 70% by volume or less, more preferably 15% by volume or more and 60% by volume or less, and still more preferably 20% by volume or more and 60% by volume or less.

The material for the matrix resin is not particularly limited as long as it is a thermoplastic resin, and the matrix resin may be a crystalline resin or an amorphous resin.

Examples of the thermoplastic resin include polyolefin resins such as polyethylene, polypropylene, polybutene, and poly-4-methyl-1-pentene, polyamide resins, polyester resins, polystyrene resins, thermoplastic polyimide resins, polyamideimide resins, polycarbonate resins, polyphenylene ether resins, polyphenylene sulfide resins, polyacetal resins, acrylic resins, polyetherimide resins, polysulfone resins, polyetherketone resins, polyetheretherketone resins, polyarylate resins, polyethernitrile resins, vinyl chloride resins, ABS resins, and fluororesins. These thermoplastic resins may be derived from a fossil fuel, may be derived from a biomass raw material, or may be a mixture thereof.

Among these, a polyamide resin and a polyolefin resin are preferable because they are less likely to be damaged even in a case of being collided with by flying objects such as pebbles, and the reliability of lower body 200 and upper body 300 can be improved. From the viewpoint of suppressing a decrease in mechanical characteristics when the skin material 250 absorbs water, a polyolefin resin is more preferable, and a polypropylene resin is still more preferable.

The matrix resin may be a resin composition including an additive. Examples of the additive include known fillers (inorganic fillers and organic fillers), pigments, dyes, weatherability stabilizers, heat stabilizers, antistatic agents, antislip agents, antioxidants, fungicides, antibacterial agents, flame retardants, and softening agents.

In addition, the matrix resin may include a resin other than the above-described resins or other components such as short fibers having a length shorter than the carbon fibers.

The content of the matrix resin based on the total mass of lower outer shell 210 and upper outer shell 310 is preferably 20% by mass or more and 80% by mass or less, more preferably 25% by mass or more and 70% by mass or less, still more preferably 35% by mass or more and 70% by mass or less, and particularly preferably 40% by mass or more and 65% by mass or less.

The content of the matrix resin based on the total volume of lower outer shell 210 and upper outer shell 310 is preferably 30% by volume or more and 90% by volume or less, more preferably 40% by volume or more and 85% by volume or less, and still more preferably 40% by volume or more and 80% by volume or less.

### 1-1-1. Lower outer shell

Lower outer shell 210 illustrated in FIG. 2 includes a planar or curved lower bottom surface portion 212 constituting the bottom surface of body portion 110 and a planar or curved lower wall portion 214 that rises from the end part at the peripheral edge portion of lower bottom surface portion 212 in a direction toward upper body 300. Lower bottom surface portion 212 and lower wall portion 214 are integrally formed from a sheet of the fiber-reinforced resin.

The shape of lower bottom surface portion 212 may be a polygonal shape such as that of a triangle, a quadrangle, a pentagon, a hexagon, or an octagon, or a circular shape such as that of a circle or an ellipse. In the present embodiment, lower bottom surface portion 212 has a quadrangular shape, where each side is a curve convex to the outside. The area of lower bottom surface portion 212 can be, for example, 5 cm² or more and 30,000 cm² or less, and preferably 400 cm² or more and 10,000 cm² or less.

Lower wall portion 214 may be formed on the entire surface of the outer periphery of lower bottom surface portion 212 or may be formed on a part of the outer periphery. In the present embodiment, lower wall portion 214 is formed at four locations along the respective sides of lower bottom surface portion 212 having a quadrangular shape, except at the vicinities of the vertexes of the outer periphery. The height of lower wall portion 214 may be, for example, 0.5 cm or more and 100 cm or less, and preferably 1 cm or more and 50 cm or less. The vicinity of the vertex of the outer periphery of lower bottom surface portion 212 is a site where arm portion 122 for attaching blade 120 is disposed, and lower wall portion 214 has a shape bent outward along arm portion 122 in these sites.

The rising angle of lower wall portion 214 is preferably perpendicular to lower bottom surface portion 212 or at an angle directed outward therefrom. By setting such an angle, the undercut portion is not generated, and lower body 200 is easily pulled out from the mold after molding. Therefore, even when lower reinforcing material 220 is formed by injection of a thermoplastic resin, lower body 200 is easily manufactured.

Lower reinforcing material 220 made of a thermoplastic resin is disposed on the inner side of lower outer shell 210. In the present embodiment, lower reinforcing material 220 includes a plurality of bottom surface ribs 222 disposed in a lattice shape on the inner surface of lower bottom surface portion 212 and wall surface reinforcing portion 224 disposed on the inner surface of lower wall portion 214.

### 1-1-2. Upper outer shell

Upper outer shell 310 illustrated in FIG. 2 includes a planar or curved upper top surface portion 312 constituting the upper surface of body portion 110 and a planar or curved upper wall portion 314 that rises from the end part at the peripheral edge portion of upper top surface portion 312 in a direction toward lower body 200. Upper top surface portion 312 and upper wall portion 314 are integrally formed of a sheet of the fiber-reinforced resin.

The shape of upper top surface portion 312 may be a polygonal shape such as that of a triangle, a quadrangle, a pentagon, a hexagon, or an octagon, or a circular shape such as that of a circle or an ellipse. The shape of upper top surface portion 312 may be substantially the same as the shape of lower bottom surface portion 212.

Upper wall portion 314 may be formed on the entire surface of the outer periphery of upper top surface portion 312 or may be formed on a part of the outer periphery. Upper wall portion 314 is formed at a position corresponding to lower wall portion 214. However, the height of upper wall portion 314 may be lower than the height of lower wall portion 214. The height of upper wall portion 314 may be, for example, 0.5 cm or more and 100 cm or less, and is preferably 1 cm or more and 50 cm or less.

The rising angle of upper wall portion 314 is preferably perpendicular to upper top surface portion 312 or at an angle directed outward therefrom. By setting such an angle, the undercut portion is not generated, and upper body 300 is easily pulled out from the mold after molding. Therefore, even when the upper reinforcing material is formed by injection of the thermoplastic resin, upper body 300 is easily manufactured.

### 1-2. Reinforcing material

### 1-2-1. Lower reinforcing material

Lower reinforcing material 220 is disposed on the inner surface of lower outer shell 210.

Lower reinforcing material 220 is made of a thermoplastic resin. The lower reinforcing material may include a reinforcing material such as reinforcing fibers, but the reinforcing fibers are, for example, preferably short fibers having a fiber length of 5 mm or less. In addition, it is preferable that lower reinforcing material 220 does not include reinforcing fibers that are arranged to be oriented in one direction.

The thermoplastic resin described as the material for lower outer shell 210 and upper outer shell 310 can be used as the thermoplastic resin serving as the material for lower reinforcing material 220 in the same manner. The thermoplastic resin serving as the material for lower reinforcing material 220 is preferably a resin of the same type as the thermoplastic resin serving as the material for lower outer shell 210, and for example, both materials are preferably polypropylene.

Bottom surface ribs 222 are disposed on the inner surface of lower bottom surface portion 212 to reinforce lower bottom surface portion 212. In the present embodiment, bottom surface ribs 222 are disposed in lattice shape that defines a quadrangular section. However, the disposition of bottom surface ribs 222 is not limited thereto, and bottom surface ribs 222 may be disposed in a lattice shape divided into triangles or hexagons or may be disposed in a shape other than the lattice.

From the viewpoint of improving the fluidity of the resin when forming bottom surface ribs 222 by injection of the thermoplastic resin and making it less likely to generate a defect in bottom surface ribs 222 during manufacturing, bottom surface ribs 222 are preferably disposed in a lattice shape defining a quadrangular section. The quadrangular lattice shape tends to have lower rigidity in a diagonal direction than a lattice shape such as a triangle. On the other hand, when lower outer shell 210 is configured to include a single layer or a multi-layer of unidirectional fiber layer(s), and at least one unidirectional fiber layer includes a layer in which the reinforcing fibers are oriented in the diagonal direction of the quadrangular lattice shape, the rigidity in the diagonal direction can also be increased. The direction in which the reinforcing fibers are oriented in the at least one unidirectional fiber layer may be within ±15° with respect to the diagonal direction of the quadrangular lattice shape, and is preferably within ±5° and more preferably within ±3°.

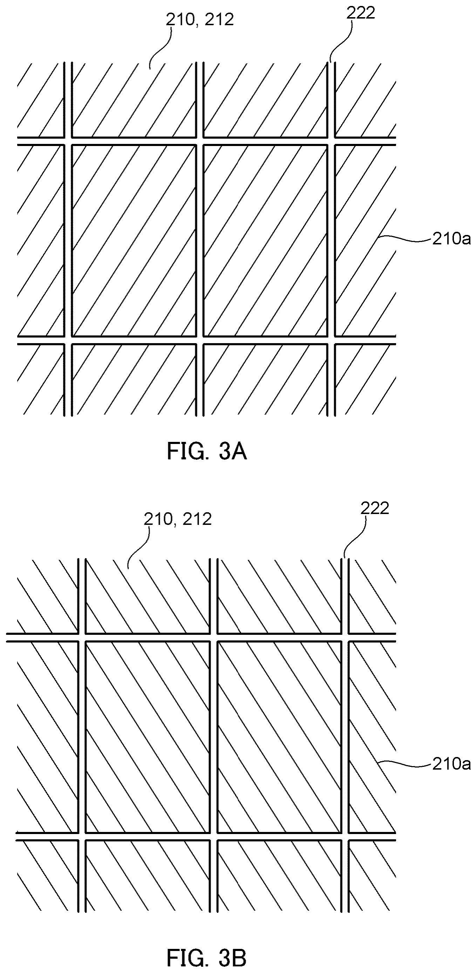

FIGS. 3A and 3B are schematic plan views indicating the relationship between the lattice shape of bottom surface ribs 222 and the orientation direction of the fibers in a unidirectional fiber layer included in lower outer shell 210. As illustrated in FIGS. 3A and 3B, in the present embodiment, bottom surface ribs 222 are disposed in a quadrangular lattice shape. In addition, in one unidirectional fiber layer included in lower outer shell 210, reinforcing fibers 210a are oriented in the diagonal direction of the quadrangular lattice shape (FIG. 3A). In addition, in another unidirectional fiber layer included in lower outer shell 210, reinforcing fibers 210a are oriented in a different diagonal direction of the quadrangular lattice shape (FIG. 3B). As illustrated in FIGS. 3A and 3B, lower outer shell 210 preferably includes a plurality of layers whose reinforcing fibers are respectively oriented in two diagonal directions of the quadrangular lattice shape; however, lower outer shell 210 may include only one layer among these layers as long as the rigidity is sufficiently increased. Alternatively, one unidirectional fiber layer may be a layer in which reinforcing fibers 210a are oriented to be disposed in these two diagonal directions and are woven. Lower outer shell 210 may further include another layer in which reinforcing fibers 210a are oriented in a direction different from these directions.

It is preferable that all the ribs of bottom surface ribs 222 are connected and there is no isolated single rib. By such disposition, bottom surface ribs 222 can be efficiently produced by one injection of the thermoplastic resin.

In a region between the ribs constituting the lattice, a thin layer of a thermoplastic resin may or may not be formed on the inner surface of lower bottom surface portion 212. From the viewpoint of reducing the weight of lower body 200, it is preferable that the size of the thin layer of a thermoplastic resin is small in the region between the ribs, and it is more preferable that the thin layer is not formed.

Bottom surface ribs 222 include a plurality of boss portions 222a each protrude toward the direction of upper body 300 at an intersection of the ribs. Boss portion 222a is a nut into which bolt 400 can be inserted. Upper body 300 includes the boss portions made of a thermoplastic resin at positions corresponding to those of boss portions 222a of lower body 200, and lower body 200 and upper body 300 are joined to each other by bolts 400 via these boss portions.

Wall surface reinforcing portion 224 is disposed on the inner surface of lower wall portion 214 to reinforce lower wall portion 214.

Wall surface reinforcing portion 224 includes film portion 224a formed in a thin film shape on the inner surface of lower wall portion 214 and wall surface ribs 224b formed from the lower end (lower bottom surface portion 212 side) to the upper end (upper body 300 side) of lower wall portion 214. Wall surface reinforcing portion 224 is connected to the end part of bottom surface ribs 222. By such disposition, both bottom surface ribs 222 and wall surface reinforcing portion 224 can be efficiently produced by one injection of the thermoplastic resin. From the viewpoint of improving the effect of increasing the rigidity by each rib, it is preferable that the lower end of wall surface rib 224b and the end part of bottom surface rib 222 are connected to each other.

Film portion 224a may cover the entire surface of lower wall portion 214 or may partially cover lower wall portion 214. From the viewpoint of improving the reinforcing effect, it is preferable that film portion 224a covers the entire surface of lower wall portion 214. Film portion 224a is not necessarily required when a sufficient reinforcing effect is obtained by wall surface rib 224b.

It is preferable that film portion 224a includes covering portion 224c that covers the upper surface of the upper end (upper body 300 side) of lower wall portion 214. When a sheet of the fiber-reinforced resin serving as the material for lower outer shell 210 is disposed inside a molding die, and lower body 200 is produced by injecting a thermoplastic resin serving as the material for lower reinforcing material 220, the sheet of the fiber-reinforced resin may be displaced due to the flow of the injected thermoplastic resin, and the height of lower wall portion 214 may vary depending on the location. On the other hand, by covering the upper end of lower wall portion 214 with the injected thermoplastic resin, it is possible to make it less likely to generate a deviation in the height of lower wall portion 214. In addition, thermoplastic resins are less slippery than fiber-reinforced resins. By these actions, film portion 224a covering the upper end of lower wall portion 214 can easily align lower body 200 and upper body 300. In this case, it is preferable that the lower surface of the lower end (lower body 200 side) of the upper wall portion of upper body 300 (the lower surface is brought into contact with film portion 224a covering the upper end of lower wall portion 214 when lower body 200 and upper body 300 are joined to each other) is also covered with a film portion formed of a thermoplastic resin injected in the same manner. In addition, by covering the upper end of lower wall portion 214 with the injected thermoplastic resin, the rigidity of lower body 200 can be increased.

A plurality of wall surface ribs 224b are disposed in lower wall portion 214 to increase the reinforcing effect of lower wall portion 214. In this case, as described above, by connecting the lower end of wall surface rib 224b to the end part of bottom surface rib 222, the reinforcing effect of the entire lower body 200 can be further increased. Wall surface rib 224b is not necessarily required when a sufficient reinforcing effect is obtained by film portion 224a.

### 1-2-2. Upper reinforcing material

An upper reinforcing material (not illustrated) made of a thermoplastic resin may be disposed on the inner side of upper outer shell 310, or the upper reinforcing material is not required to be disposed when sufficient rigidity is obtained. The upper reinforcing material may have a configuration including an upper rib and the wall surface reinforcing portion in the same manner as the lower reinforcing material.

### 1-3. Joining of lower body and upper body

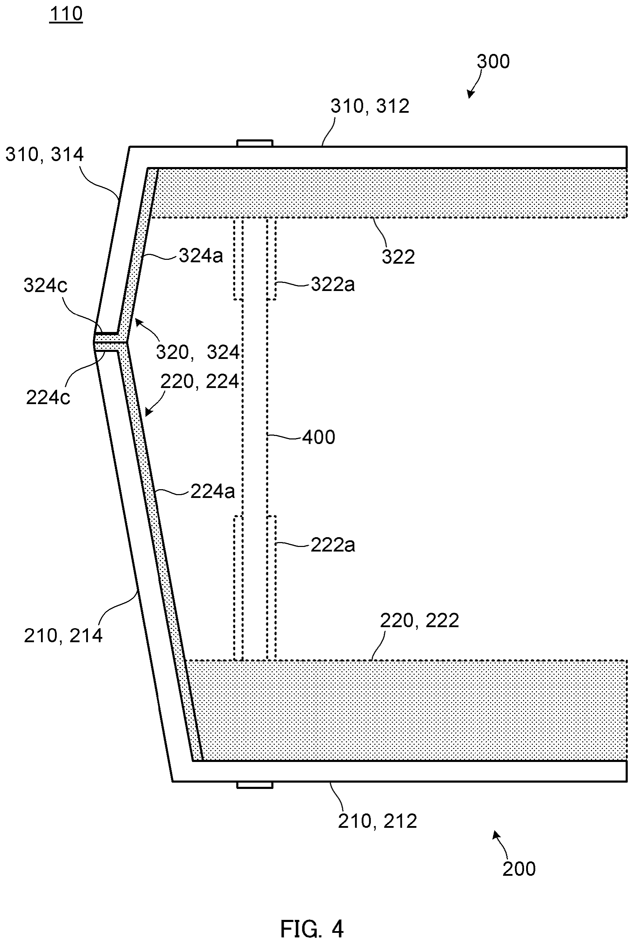

FIG. 4 is a schematic cross-sectional view of the end part of body portion 110 (housing) illustrating a state in which lower body 200 and upper body 300 are joined to each other.

As illustrated in FIG. 4, lower body 200 includes lower outer shell 210 and lower reinforcing material 220. Lower outer shell 210 includes lower bottom surface portion 212 and lower wall portion 214. Lower reinforcing material 220 includes bottom surface rib 222 and wall surface reinforcing portion 224 (i.e., film portion 224a and wall surface ribs 224b. However, wall surface ribs 224b are not illustrated in FIG. 4). The upper end of film portion 224a is a covering portion 224c covering the upper end of lower wall portion 214.

In addition, as illustrated in FIG. 4, upper body 300 includes upper outer shell 310 and an upper reinforcing material 320. Upper outer shell 310 includes upper top surface portion 312 and upper wall portion 314. Upper reinforcing material 320 includes top surface rib 322 and wall surface reinforcing portion 324 (i.e., film portion 324a and wall surface ribs. However, the wall surface ribs are not illustrated in FIG. 4). The lower end of film portion 324a is covering portion 324c covering the lower end of upper wall portion 314. As illustrated in FIG. 4, the height of upper wall portion 314 of upper outer shell 310 may be lower than the height of lower wall portion 214 of lower outer shell 210. In addition, as illustrated in FIG. 4, unlike lower outer shell 210, upper outer shell 310 does not need to receive a load of components loaded on body portion 110 (housing), so that the height of top surface rib 322 of upper reinforcing material 320 may be lower than the height of bottom surface rib 222 of lower reinforcing material 220.

As illustrated in FIG. 4, lower body 200 and upper body 300 are aligned with each other such that covering portion 224c and covering portion 324c, which cover the wall portions of their respective outer shells, are in contact with each other. By bringing the thermoplastic resin-made covering portions, which are less slippery, into contact with each other in this manner, it is possible to prevent the deviation between lower body 200 and upper body 300. Lower body 200 and upper body 300 are joined to each other by inserting bolt 400 into boss portion 222a (boss portion formed at an intersection of bottom surface ribs 222 having a lattice shape) made of a thermoplastic resin and formed in lower body 200 and the boss portion 322a (boss portion formed at an intersection of the top surface ribs 322 having a lattice shape) made of a thermoplastic resin and formed in upper body 300. A plurality of the boss portions into which bolts 400 are inserted may be provided, or the boss portions may be disposed at a position other than the intersection of the lattice-shaped ribs.

In the present embodiment, by forming lower outer shell 210 (including lower bottom surface portion 212 and lower wall portion 214) and upper outer shell 310 (including upper top surface portion 312 and upper wall portion 314) into a monocoque structure, the rigidity of body portion 110 (housing) can be increased while reducing the number of components. In addition, by forming body portion 110 (housing) into a structure in which lower body 200 and upper body 300 are joined to each other, it is possible to manufacture lower body 200 and upper body 300 without generating an undercut portion, and body portion 110 (housing) can be easily manufactured even by a method of injecting a thermoplastic resin.

### 2. Method for manufacturing housing and drone

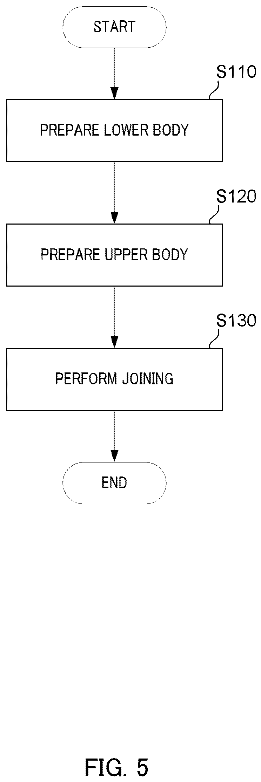

FIG. 5 is a flowchart of the method for manufacturing body portion 110 (housing) described above. As illustrated in FIG. 5, the housing is manufactured by a step (step S110) of preparing lower body 200 having the above-described configuration, a step (step S120) of preparing upper body 300 having the above-described configuration, and a step (step S130) of joining lower body 200 and upper body 300 to each other. Step S110 and step S120 may be performed in any order or simultaneously. Hereinafter, each step will be described in detail.

### 2-1. Step S110: Preparation of lower body

Lower body 200 can be produced by, for example, forming lower outer shell 210 by shaping a fiber-reinforced resin sheet, and then forming lower reinforcing material 220 by insert molding by injecting a thermoplastic resin into a mold in which lower outer shell 210 is disposed.

The fiber-reinforced resin sheet may be a fiber-reinforced resin sheet including the reinforcing fibers and the thermoplastic resin described above as the materials for lower outer shell 210. For example, a unidirectional sheet including reinforcing fibers arranged to be oriented in one direction and a thermoplastic resin spreading through the reinforcing fibers can be used. The fiber-reinforced resin sheet is cut into an unfolded shape of lower outer shell 210 to be shaped.

The fiber-reinforced resin sheet can be shaped by a known method such as hot press molding. In this case, it is preferable to stack a plurality of fiber-reinforced resin sheets and integrate the fiber-reinforced resin sheets by hot pressing. When a plurality of unidirectional sheets are used, the orientation direction of the reinforcing fibers may be changed for each layer to reduce the difference in rigidity in a direction in which a load is applied. In addition, the unidirectional sheet may be disposed such that the reinforcing fibers are oriented in the diagonal direction of the lattice shape of bottom surface ribs 222 described above, and the unidirectional sheet may be hot-pressed.

The thermoplastic resin may be injected into a mold in which the shaped fiber-reinforced resin sheet is disposed and a cavity having a shape of the lower reinforcing material is formed on the surface of the fiber-reinforced resin sheet. As bottom surface ribs 222 and wall surface reinforcing portion 324 has a shape such that they are connected to each other, lower reinforcing material 220 can be formed by injecting the thermoplastic resin only once.

Thereafter, post-processing such as forming a hole for fitting bolt 400 may be performed.

### 2-2. Step S120: Preparation of upper body

Upper body 300 can be produced by the same manner as for lower body 200, for example, forming upper outer shell 310 by shaping a fiber-reinforced resin sheet, and then forming upper reinforcing material 320 by insert molding by injecting a thermoplastic resin into a mold in which upper outer shell 310 is disposed.

### 2-3. Step S130: Joining

Next, lower body 200 and upper body 300 are joined to each other. Specifically, with arm portions 122 for attaching blades 120 and/or a component such as a battery placed on the bottom surface of lower body 200, lower body 200 and upper body 300 are aligned vertically and joined together with bolts 400.

Thereafter, blade 120 is attached to arm portion 122, and leg portion 130 is attached to the lower body, thereby obtaining drone 100 including body portion 110 (housing) described above.

### 3. Other embodiments

The above-described embodiment shows an example of the present invention, and the present invention is not limited to the above-described embodiment. It goes without saying that various other embodiments are also possible within the scope of the spirit of the present invention.

For example, in the above-described embodiment, film portion 224a in wall surface reinforcing portion 224 of lower body 200 may cover the upper end of lower wall portion 214, but film portion 224a may further extend around the outer side of lower wall portion 214 and partially cover the outer side. Film portion 224a disposed on the outer side of lower wall portion 214 in this manner can be used as an attachment portion for attaching another member to drone 100.

In addition, the housing described above can be used not only as the body of a drone, but also as a housing attached to the arm portion or leg portion to house or hold other components.

This application is entitled to and claims the benefit of Japanese Patent Application No. 2023-091302 filed on June 2, 2023 , the disclosure of which including the specification, claims, and drawings is incorporated herein by reference in its entirety.

### Industrial Applicability

The drone including the housing according to the present invention can be used for various applications such as spraying of pesticides, transport of supplies, and imaging from a high place.

### Reference Signs List

100 Drone
110 Body portion
120 Blade
122 Arm portion
130 Leg portion
200 Lower body
210 Lower outer shell
210a Reinforcing fiber
212 Lower bottom surface portion
214 Lower wall portion
220 Lower reinforcing material
222 Bottom surface rib
222a Boss portion
224 Wall surface reinforcing portion
224a Film portion
224b Wall surface rib
224c Covering portion
300 Upper body
310 Upper outer shell
312 Upper top surface portion
314 Upper wall portion
320 Upper reinforcing material
322 Top surface rib
322a Boss portion
324 Wall surface reinforcing portion
324a Film portion
324c Covering portion
400 Bolt

## Claims

1. A housing for a drone, the housing comprising:
a lower body including a bottom surface portion and a wall portion formed on a peripheral edge portion of the bottom surface portion; and
an upper body including a top surface portion and a wall portion formed on a peripheral edge portion of the top surface portion, wherein
the lower body includes an outer shell and a reinforcing material, the outer shell being made of a fiber-reinforced resin that includes reinforcing fibers and a thermoplastic resin spreading through the reinforcing fibers, the reinforcing material being made of a thermoplastic resin and disposed on a part of an inner surface of the outer shell.

2. The housing according to claim 1, wherein
the outer shell includes a unidirectional fiber layer composed of the fiber-reinforced resin in which the reinforcing fibers are arranged to be oriented in one direction.

3. The housing according to claim 1 or 2, wherein
the reinforcing material made of the thermoplastic resin has a lattice shape formed of a plurality of bottom surface ribs.

4. The housing according to claim 3, wherein:
the reinforcing material made of the thermoplastic resin includes a boss portion formed at an intersection of the plurality of bottom surface ribs; and
the lower body is joined to the upper body by a bolt inserted into the boss portion.

5. The housing according to claim 3 or 4, wherein:
the reinforcing material made of the thermoplastic resin includes a wall surface reinforcing portion disposed on an inner surface of the wall portion of the lower body; and
the wall surface reinforcing portion is connected to the plurality of bottom surface ribs.

6. The housing according to any one of claims 3 to 5, wherein:
the plurality of bottom surface ribs are disposed in the lattice shape defining a section of a quadrangle;
the outer shell includes a unidirectional fiber layer composed of the fiber-reinforced resin in which the reinforcing fibers are arranged to be oriented in one direction; and
the unidirectional fiber layer includes a layer in which the reinforcing fibers are arranged to be oriented in a diagonal direction of the quadrangle.

7. The housing according to any one of claims 1 to 6, wherein:
the reinforcing material made of the thermoplastic resin includes a wall surface reinforcing portion disposed on an inner surface of the wall portion of the lower body;
the wall surface reinforcing portion covers an upper end of the wall portion of the lower body; and
the wall surface reinforcing portion covering the upper end of the wall portion of the lower body is in contact with the wall portion of the upper body.

8. The housing according to any one of claims 1 to 7, wherein
the reinforcing material is formed by injection of the thermoplastic resin.

9. The housing according to any one of claims 1 to 8, wherein
the upper body includes an outer shell and a reinforcing material, the outer shell being made of a fiber-reinforced resin, the reinforcing material being made of a thermoplastic resin and disposed on an inner surface of the outer shell.

10. A drone comprising:
the housing according to any one of claims 1 to 9.

11. A method for manufacturing a housing for a drone, the method comprising:
preparing a lower body including a bottom surface portion and a wall portion formed on a peripheral edge portion of the bottom surface portion;
preparing an upper body including a top surface portion and a wall portion formed on a peripheral edge portion of the top surface portion; and
joining the lower body and the upper body to each other, wherein
the lower body includes an outer shell and a reinforcing material, the outer shell being made of a fiber-reinforced resin that includes reinforcing fibers and a thermoplastic resin spreading through the reinforcing fibers, the reinforcing material being made of a thermoplastic resin and disposed on a part of an inner surface of the outer shell, and
in the joining, the lower body and the upper body are joined to each other via the outer shell made of the thermoplastic resin.
